# EUROPEAN PATENT SPECIFICATION

(11) **EP 4 526 205 B1**
(45) Date of publication and mention of the grant of the patent: **22.04.2026**
(21) Application number: 23732229.2
(22) Date of filing: 16.05.2023
(51) Int. Cl.: B63C 7/10

(54) **APPARATUS, SYSTEM AND METHOD FOR MONITORING A SUBSEA LOAD**
VORRICHTUNG, SYSTEM UND VERFAHREN ZUR ÜBERWACHUNG EINER UNTERWASSERLAST
APPAREIL, SYSTÈME ET PROCÉDÉ DE SURVEILLANCE D'UNE CHARGE SOUS-MARINE

(30) Priority: 19.05.2022 NO 20220589
(43) Date of publication of application: 26.03.2025
(73) Proprietor: BRAATEN.TECHNOLOGY AS, 4052 Røyneberg (NO)
(72) Inventor: JOHANSEN, Martin, 1628 Engelsviken (NO)
(74) Representative: Håmsø Patentbyrå AS
(86) International application number: PCT/NO2023/050113
(87) International publication number: WO 2023/224491

(56) References cited:
- WO-A1-01/70568
- WO-A1-2009/011595
- GB-A- 2 496 608

## Description

### TECHNICAL FIELD

The invention relates to a subsea load monitoring system, and more particularly the invention relates to a subsea load monitoring apparatus for monitoring buoyancy applied to a subsea load. Furthermore the invention relates to a mooring monitoring system for an offshore structure.

### BACKGROUND OF THE INVENTION

During subsea lifting operations, by a Remotely Operated Vehicle (ROV), buoyancy elements are usually mounted onto the load to be lifted. This is to reduce the total weight of the load to be lifted by the ROV. The number of buoyancy elements to be attached to the load is typically determined by a combination of mathematical calculations and qualified guessing by the ROV operator. After the determined number of buoyancy elements has been attached to the load, the ROV grabs the load and starts to lift it. Normally, the load is too heavy despite the buoyancy elements, and the ROV has to use full thrust to be able to lift the load. When the ROV is using full thrust to lift a load there is a risk of the ROV losing thruster engine power due to stress. This may cause the ROV and the load to collide with the sea bottom, or with other equipment in the vicinity of the lifting operation, resulting in damages on highly expensive equipment. Furthermore, the ROV thrusters operating at full force near the sea bottom may cause the sea bed to be stirred up, leading to reduction or loss of sight. A known subsea load monitoring apparatus is for example shown in document GB2496608.

### SUMMARY OF THE INVENTION

The invention has for its object to remedy or to reduce at least one of the drawbacks of the prior art, or at least provide a useful alternative to prior art.

The object is achieved through features, which are specified in the description below and in the claims that follow.

The invention is defined by the independent patent claims. The dependent claims define advantageous embodiments of the invention.

In a first aspect the invention relates to a subsea load monitoring apparatus comprising:
- a load sensor having a first end and a second end;
- a central processing unit configured for processing measurements from the load sensor;
- a battery for powering the central processing unit;
- an activation device being configured for activating the central processing unit from an idle operational mode to an active operational mode;
- a first and a second load attachment means connected to the first and second end of the load sensor, respectively;
- an output device for the processed measurements from the load sensor; and
- a housing that comprises at least the load sensor, the central processing unit, the battery, the activation device and the output device.

The effects of the features of the subsea load monitoring apparatus in accordance with the invention are as follows.

Firstly, the subsea load monitoring apparatus can be used to measure the strain between the first and second end of the load sensor. This can for example be used to monitor how much buoyancy is applied to a subsea load. The subsea load monitoring apparatus may be attached to a subsea load by the first or the second load attachment means, and one or more buoyancy elements may be attached to the other one of the first or the second load attachment means. The positive buoyancy of the buoyancy elements creates a strain measurable by the load sensor. The central processing unit may process the strain measurements to calculate the buoyancy created by the buoyancy elements. The processed measurements, that is the buoyancy applied to the subsea load, may then be read by an operator through the output device. This is an advantage during subsea lifting operations. By using the subsea load monitoring apparatus, the operator may have better control over how much buoyancy is applied to the subsea load. The operator may fine tune the number of buoyancy elements to be attached or detached to the subsea load before lifting the subsea load, which may decrease the risks associated with a subsea lifting operation.

If the weight of the subsea load to be lifted is known, the weight may be included in the calculations so that the total weight of the load to be lifted may be given by the output device.

Secondly, the subsea load monitoring apparatus is battery driven, which makes it easier for an operator to manipulate and move the subsea load monitoring apparatus during operations under water since the subsea load monitoring apparatus does not require a cable. The subsea load monitoring apparatus may be stored at the sea bed, close to where operations are performed. This may increase the efficiency of a subsea lifting operation. Preferably, the subsea load monitoring apparatus comprises more than one battery.

Furthermore, the activation device is configured for activating the central processing unit from an idle operational mode to an active operational mode. An operator may therefore choose when to activate the subsea load monitoring apparatus, and the subsea load monitoring apparatus may stay in the idle operational mode when the subsea load monitoring apparatus is not in use. In the idle operational mode, the battery is not drained, so the activation device enables battery saving of the subsea load monitoring apparatus. The subsea load monitoring apparatus may therefore stay subsea for a longer period, for example six months or a year, before the battery needs to be changed or recharged.

The load sensor may comprise a strain gauge. The load sensor may comprise a Fibre Bragg Grating (FBG) sensor. The load sensor may comprise a strain gauge and a FBG sensor.

The subsea load monitoring apparatus may automatically switch from the active operational mode to the idle operational mode after a set period, for example 15 minutes, 30 minutes or one hour. The subsea load monitoring apparatus may automatically switch from the active operational mode to the idle operational mode if no change in strain has been registered for a set period of time.

In the idle operational mode, the central processing unit is inactive, that is no signals from the load sensor or other signals are processed and transmitted to the output device, which may prolong the lifetime of the battery.

In the active mode, the central processing unit is active and may process signals from the load sensor or other signals, and transmit the processed signals to the output device.

In an embodiment of the subsea load monitoring apparatus according to the invention, the activation device is configured for resetting the output device.

If the subsea load monitoring apparatus is moved up or down under water, the surrounding, hydrostatic pressure may compress or stretch the load sensor which may be interpreted as removed or added buoyancy by the central processing unit. It may therefore be an advantage to reset the output to zero to have a new reference point before adding buoyancy elements, in order to compensate for changes in the hydrostatic pressure.

In some examples, the activation device is configured for deactivating the central processing unit from an active operational mode to an idle operational mode. An operator may then choose when to deactivate the subsea load monitoring apparatus. This may enable increased battery saving.

In an embodiment of the subsea load monitoring apparatus according to the invention, the activation device comprises a magnet. The magnet may be triggered by a complementary magnet on for example a ROV arm. The activation device may comprise two magnets, wherein triggering the first magnet may activate the central processing unit and triggering the second magnet may deactivate the central processing unit. Triggering of the first or the second magnet may recalibrate the load sensor. Simultaneously triggering the first and the second magnet may recalibrate the load sensor, activate, or deactivate the central processing unit.

In a further embodiment of the subsea load monitoring apparatus according to the invention, the activation device comprises a light sensor. The light sensor may be triggered by a complementary light source, such as a laser, on for example a ROV arm. The activation device may comprise two light sensors, wherein triggering the first light sensor may activate the central processing unit and triggering the second light sensor may deactivate the central processing unit. Triggering of the first or the second light sensor may recalibrate the load sensor. Simultaneously triggering the first and the second light sensor may recalibrate the load sensor, activate, or deactivate the central processing unit.

The activation device may comprise a combination of one or more light sensors and one or more magnets.

In a further embodiment of the subsea load monitoring apparatus, the activation device is configured for activating the central processing unit from an idle operational mode to an active operational mode when the load sensor measures a strain that is outside a set range of values.

The activation device may be configured for reading strain measurement signals from the load sensor. If the measured strain exceeds a set higher threshold, the activation device may activate the central processing unit from an idle operational mode to an active operational mode. Similarly, if the measured strain is lower than a set lower threshold, the activation device may activate the central processing unit from an idle operational mode to an active operational mode.

The subsea load monitoring apparatus may be connected between an offshore structure, such as a fish pen or a floating wind turbine, and an anchoring point of the offshore structure, for monitoring the strain between the offshore structure and the anchoring point. The subsea load monitoring apparatus may be installed in this system for a longer period of time. It may therefore be advantageous for the central processing unit to be activated when the strain measured by the load sensor exceeds a set higher threshold or is lower than a set lower threshold. This may increase the lifetime of the batteries in the subsea load monitoring apparatus. The thresholds may for example be a percent change, increased or decreased, from an initial set strain value.

In some examples, the subsea load monitoring apparatus further comprises one or more sensors. The one or more sensors may send signals to the central processing unit.

The one or more sensors may comprise a pressure sensor.

If the subsea load monitoring apparatus is moved up or down under water, the surrounding, hydrostatic pressure may compress or stretch the load sensor which may be interpreted as removed or added buoyancy. Measurements from the pressure sensor may be processed by the central processing unit and used in the buoyancy calculations to compensate for the effect of the hydrostatic pressure. The pressure sensor may therefore reduce the need of resetting the output device.

The one or more sensors may comprise a sensor configured for detecting a leakage of oil or gas, for example a density sensor, a temperature sensor, or a viscosity sensor.

During a subsea lifting operation using a ROV, there might be a risk of leakage of for example oil or gas from for example connections, fittings, or termination heads in close proximity to the location of the lifting operation. The sensor may then detect the leakage and the central processing unit of the subsea load monitoring apparatus may send a warning to the ROV operator to halt the lifting operation.

The subsea load monitoring apparatus may also be used during inspection and maintenance operations of for example a pipe. The pipe may be slightly lifted by buoyancy elements during the inspection or maintenance. The subsea load monitoring apparatus may be connected between the pipe and the buoyancy elements to monitor the buoyancy applied to the pipe, and to detect of there is a leakage from the pipe during the inspection or maintenance procedure.

The subsea load monitoring apparatus may also be positioned close to a wellbore during drilling to detect eventual leakages during drilling.

The central processing unit may also send a signal to an Unmanned Underwater Vehicle (UUV) to start inspecting the surrounding to find the leakage.

The one or more sensors may comprise a sensor configured for detecting other chemicals in the sea.

The subsea load monitoring apparatus comprises a housing that comprises at least the load

The housing further comprises the central processing unit, the battery, the activation device, and the output device.

It is advantageous to comprise at least the load sensor within a common housing to facilitate manipulation and moving of the subsea load monitoring apparatus during subsea operations. The housing may also prevent the load sensor and other components within the housing to come in contact with gas, and may therefore reduce the risk of explosion.

In an embodiment of the subsea load monitoring apparatus according to the invention, the output device comprises a display for displaying the processed measurements from the load sensor. The output on the device may be read by a camera of an ROV. An operator of the ROV may easily read, through signal transfer to topside, the output, that is the buoyancy attached to a subsea load, by directing the camera towards the display of the subsea load monitoring apparatus. The display may for example show the processed strain measurements as numeric values or as a graph showing processed strain measurements over time.

In an embodiment of the subsea load monitoring apparatus according to the invention, the output device comprises a sonar transmitter configured for transmitting the processed measurements. The processed measurements may for example be transmitted to a ROV. This may be advantageous as the processed measurements may be further transmitted from the ROV to the ROV operator at the surface through the ROV umbilical or tether. The operator may get the information on how much buoyancy is added to a load to be lifted without directing the camera of the ROV towards the subsea load monitoring apparatus.

In a second aspect the invention relates to a subsea load monitoring system comprising a subsea load monitoring apparatus according to the first aspect of the invention, a ROV, and a complementary activation device for triggering the activation device in the subsea load monitoring apparatus.

The complementary activation device may be connected to a handle for the ROV to hold and manipulate with a ROV arm. The complementary activation device may be integrated with the ROV.

In an embodiment of the subsea load monitoring system according to the invention, the ROV further comprises a sonar receiver configured for receiving the processed measurements from the subsea load monitoring apparatus. This may be advantageous as the processed measurements may be further transmitted from the ROV to the ROV operator at the surface through the ROV umbilical or tether. The operator may get the information on how much buoyancy is added to a load to be lifted without directing the camera of the ROV towards the subsea load monitoring apparatus.

In a third aspect the invention relates to a method for lifting a subsea load, the method comprising the steps of:
- providing the subsea load monitoring system according to the second aspect of the invention;
- attaching the first load attachment means of the subsea load monitoring apparatus to the subsea load;
- activating the subsea load monitoring apparatus;
- attaching a buoyancy element to the second attachment means of the subsea load monitoring apparatus; and
- lifting the subsea load.

The method according to the third aspect of the invention may be used for lifting a subsea load with more control of the weight to be lifted. Each time a buoyancy element has been added to the subsea load monitoring apparatus, the ROV operator may check how much total buoyancy is added. This may reduce the risk of operating the ROV at full thrust when the ROV operator starts lifting the subsea load. This may thus reduce the risk of the ROV losing thruster engine power due to stress and the damages this may cause.

The method according to the third aspect of the invention may further comprise the step of moving the subsea load to a desired location.

In a fourth aspect the invention relates to a method for estimating the weight of a subsea load. The method comprises the steps of:
- anchoring the subsea load;
- providing the subsea load monitoring system according the second aspect of the invention;
- attaching the first load attachment means of the subsea load monitoring apparatus to the subsea load;
- activating the subsea load monitoring apparatus;
- stepwise attaching buoyancy elements to the second attachment means of the subsea load monitoring apparatus until the buoyancy elements and the subsea load have a total neutral buoyancy; and
- reading the processed measurements from the load sensor.

The weight of a subsea load is often not known and may be difficult to estimate due to the hydrostatic pressure. Using the method according to the fourth aspect of the invention it is possible to estimate the weight of a subsea load. This may be advantageous for later lifting operations of the subsea load.

The ROV operator may stepwise add buoyancy elements to the subsea load monitoring apparatus until the buoyancy elements and the subsea load have a total neutral buoyancy or a slightly positive buoyancy. The buoyancy read from the output device may then give an estimated weight of the subsea load.

In a fifth aspect the invention relates to a mooring monitoring system for an offshore structure, such as a fish pen or a floating wind turbine. The mooring monitoring system comprises a subsea load monitoring apparatus according to the first aspect of the invention, wherein the subsea load monitoring apparatus is connected between the offshore structure and an anchoring point of the offshore structure.

The anchoring point may be a subsea anchor or a mooring point to which the offshore structure may be moored, such as a support structure, an anchor buoy, a quay, or a mooring buoy.

One of the first or the second load attachment means of the subsea load monitoring apparatus may be connected to the offshore structure and the other one of the first or the second load attachment means may be connected to the anchoring point. The subsea load monitoring apparatus may be connected directly to the anchoring point, or to a rope or a chain connected to the anchoring point. The subsea load monitoring apparatus may be connected directly to the offshore structure, or to a rope or a chain connected to the offshore structure.

Rough weather may cause movement of the offshore structure in the water which may cause strain between the offshore structure and the anchoring point. The mooring monitoring system according to the fifth aspect of the invention may measure this strain between the offshore structure and the anchoring point, and thus be used to monitor the mooring or anchoring of the offshore structure.

In an embodiment of the mooring monitoring system the central processing unit is in the active operational mode during the monitoring.

In a preferred embodiment of the mooring monitoring system, the activation device is configured for activating the central processing unit from an idle operational mode to an active operational mode when the load sensor measures a strain that is outside a set range of values.

The subsea load monitoring apparatus may be installed in the mooring monitoring system for a longer period of time. It may therefore be advantageous for the central processing unit to be activated when the strain measured by the load sensor exceeds a set higher threshold or is lower than a set lower threshold. This may increase the lifetime of the batteries of the subsea load monitoring apparatus.

In a preferred embodiment of the mooring monitoring system, the output device of the subsea load monitoring apparatus comprises a sonar transmitter. The output device may send the processed strain measurements from the load sensor to for example a control room at the surface. The output device may send the processed strain measurements at given time intervals or if the load sensor measures a strain that is outside a set range of values.

### DRAWINGS AND SPECIFIC DESCRIPTION

In the following is described examples of preferred embodiments illustrated in the accompanying drawings, wherein:
- Figure 1: shows a subsea load monitoring apparatus without load attachment means;
- Figure 2: shows a subsea load monitoring apparatus comprising load attachment means;
- Figure 3: shows, in exploded view, a subsea load monitoring apparatus;
- Figure 4: shows a subsea load and a buoyancy element connected to a subsea load monitoring apparatus;
- Figure 5: shows a subsea load monitoring system; and
- Figure 6: shows a block diagram of a subsea load monitoring apparatus.

Any positional indications refer to the position shown in the figures.

In the figures, same or corresponding elements are indicated by same reference numbers.

For clarity reasons, some elements may in some of the figures be without reference numbers.

A person skilled in the art will understand that the figures are just principal drawings. The relative proportions of individual elements may also be distorted.

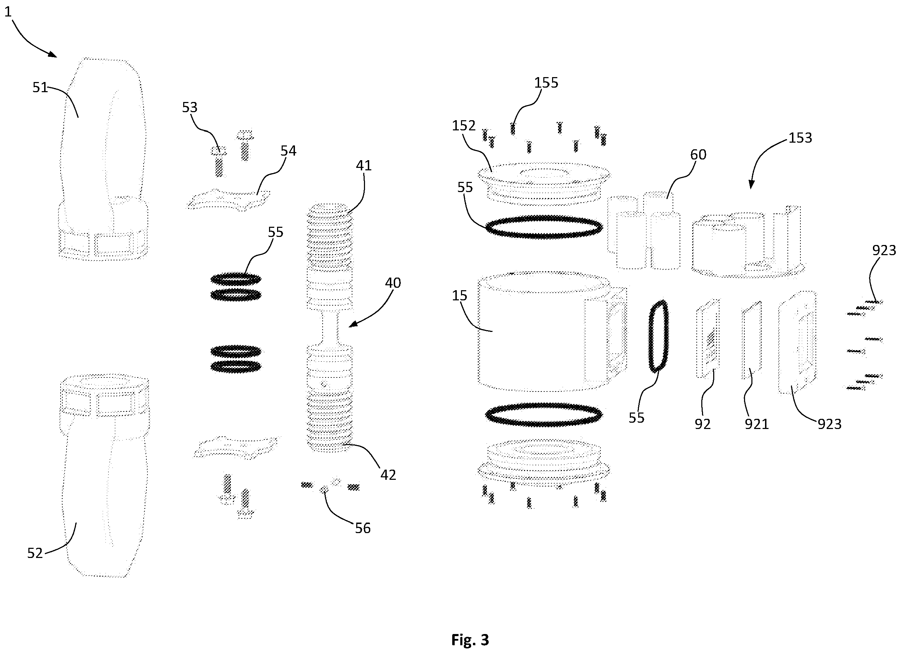

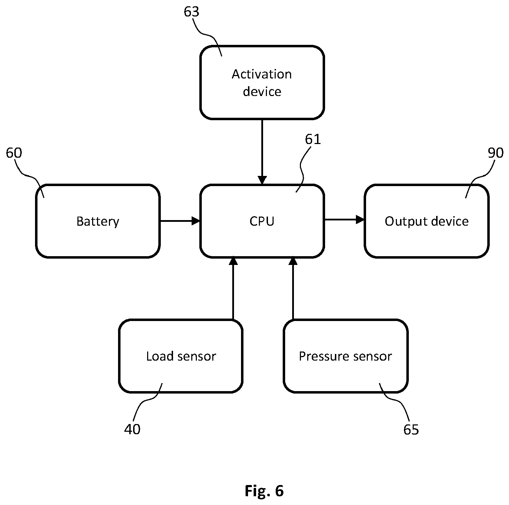

In the figures, reference number 1 denotes a subsea load monitoring apparatus. In the example shown in the figures, the subsea load monitoring apparatus 1 comprises a housing 15. The housing 15 comprises a load sensor, here shown as a strain gauge 40 (see figure 3), a central processing unit 61 (see figure 6) configured for processing measurements from the strain gauge 40, and four batteries 60 (see figure 3) for powering the central processing unit 61. The housing 15 is provided with an internal holder 153 for the batteries 60 and the central processing unit 61 for facilitating the mounting of the subsea load monitoring apparatus 1. Furthermore, the housing 15 comprises an activation device 63 configured for activating the central processing unit 61 from an idle operational mode to an active operational mode, and an output device 90 for the processed measurements from the strain gauge 40.

In the example shown in the figures, the strain gauge 40 has a first end 41 and a second end 42, wherein the two ends 41, 42 extending beyond the housing 15. The first end 41 and the second end 42 of the strain gauge 40 are threaded such that a first load attachment means 51 and a second load attachment means 52 can be screwed onto the first end 41 and the second end 42, respectively. The two load attachment means 51, 52 are herein shown as eye nuts, but other load attachment means may also be used, such as eye bolts. As shown in the exploded view in figure 3, the two load attachment means 51, 52 are screwed onto the first and the second end 41, 42 of the strain gauge 40, and firmly attached using bolts 53 and disks 54. Four locking screws 56 may lock the second end 42 to the housing 15 so that only the first end 41 may move relatively to the housing 15. The load attachment means 52 may be fastened to the strain gauge 40 by other means, such as welding.

The strain gauge 40 are provided with O-rings 55 for sealing as shown in figure 3.

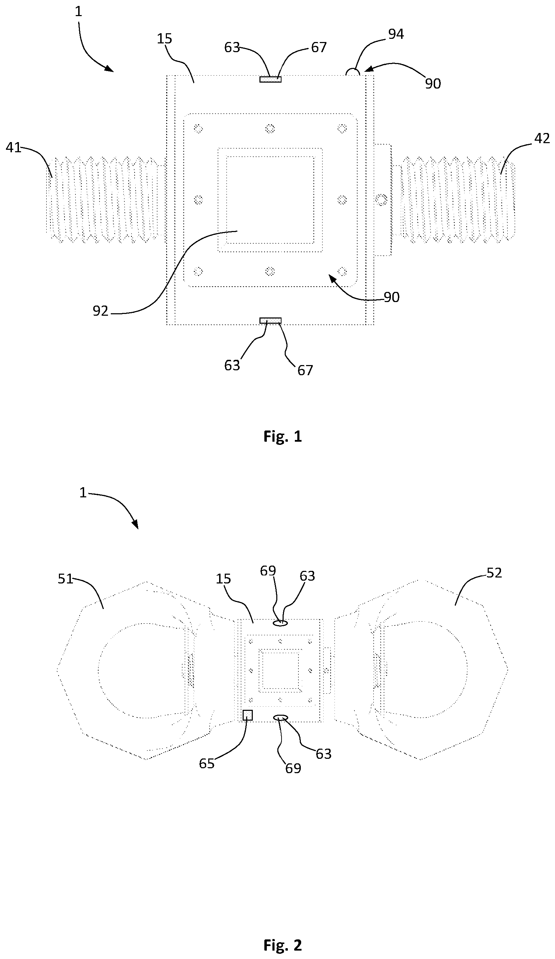

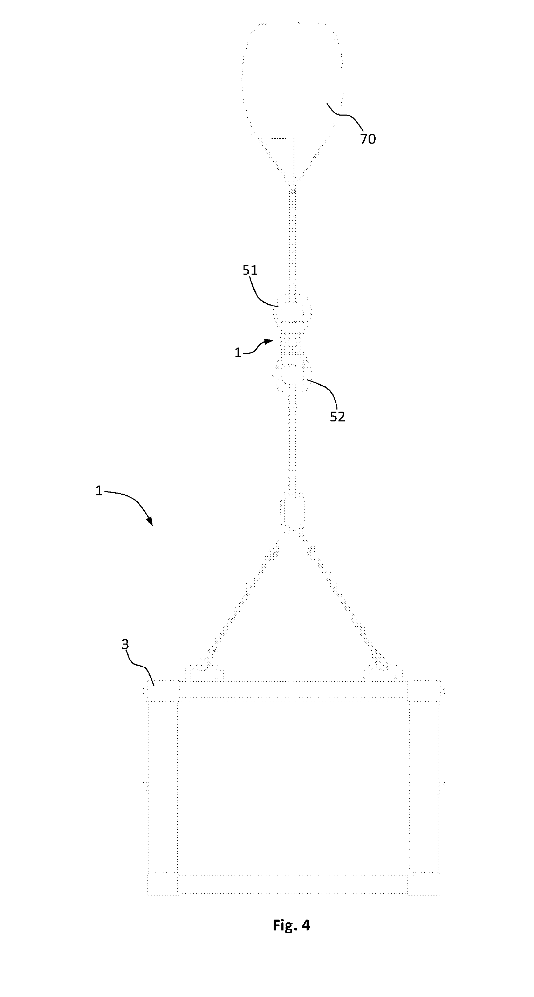

Figure 4 shows a subsea load monitoring apparatus 1 in use during a subsea lifting operation. A subsea load 3 is attached to the second load attachment means 52 and a buoyancy element 70 is attached to the first load attachment means 51. The positive buoyancy of the buoyancy element 70 creates strain between the first and the second end 41, 42, and deforms the strain gauge 40 . The deformation of the strain gauge 40 causes a change in the in electrical resistance of the strain gauge 40 that can be measured. The signals from the strain gauge 40 is then processed by the central processing unit 61 (see block diagram in figure 6). The signals from the strain gauge 40 are typically amplified and digitalised. The strain measurements are processed to calculate how much buoyancy force is acting on the subsea load 3 through the subsea load monitoring apparatus 1. The processed measurements, that is the buoyancy applied to the subsea load 3, may then be read by an operator through the output device 90 (see figure 1). The output may be in the following units: newton, kilograms, pounds, or stones.

The output device 90 may comprise a display 92 that may be read by the operator through a camera of a ROV. An example of a display 92 mounted onto the housing 15 is shown in the exploded view in figure 3. The display 92 may for example be a LED display or an LCD display. A glass window 921 is mounted between the display 92 and a window lid 923. An O-ring 55 is provided between the housing 15 and the display 92 for sealing.

In the examples shown in the figures, the subsea load 3 is attached to the second load attachment means 52 and the buoyancy element 70 is attached to the first load attachment means 51. However, the subsea load 3 could also be attached to the first load attachment means 51 and the buoyancy element 70 could be attached to the second load attachment means 52. It is preferable that the subsea load 3 and the buoyancy element 70 are attached such that the display 92 shows the output the right side up.

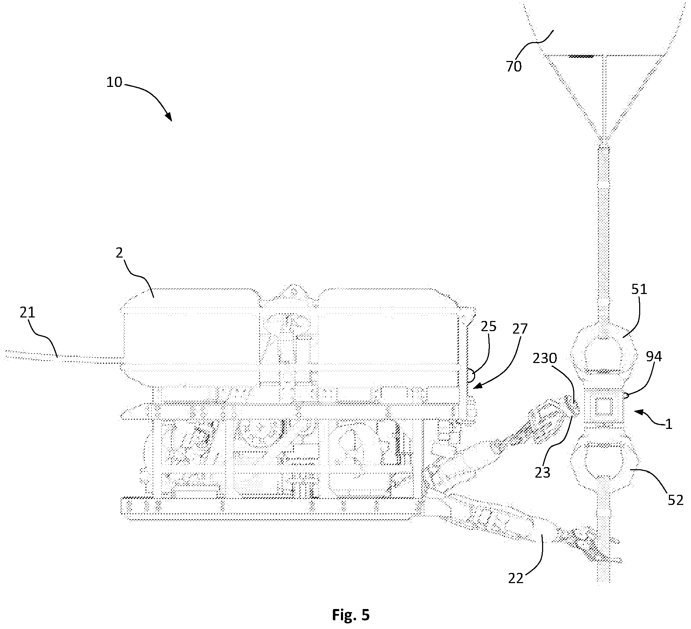

Alternatively or additionally, the output device 90 comprises a sonar transmitter 94 (see figure 1 and figure 5). The processed measurements may then be sent by acoustic signals to a sonar receiver 25 integrated with a ROV 2, as shown in figure 5. The processed measurements may then be further transmitted to the ROV operator at the surface through the ROV umbilical 21.

Figure 5 shows a subsea load monitoring system 10 comprising a subsea load monitoring apparatus 1 attached to a buoyancy element 70 at the first attachment means 51, and to a subsea load 3 (not shown in figure 5) at the second attachment means 52. The subsea load monitoring system 10 also comprises a ROV 2 tethered to the surface by an umbilical 21.

The subsea load monitoring apparatus 1 comprises an activation device 63, which in this example comprises two magnets 67 on opposite sides of the housing 15 (shown in greater details in figure 1). In one example, one of the magnets 67 activates the central processing unit 61 from an idle operational mode to an active operational mode upon triggering. The other one of the magnets 67 resets the output to zero upon triggering. Triggering the two magnets 67 at the same time deactivates the central processing unit 61 from an active operational mode to an idle operational mode. The ROV 2 is holding in an arm 22 a complementary activation device 23, which in this example comprises a magnet 230. As the complementary activation device 23 comes in close proximity to a magnet 67 on the subsea load monitoring apparatus 1, it triggers the magnet 67. Using one or more complementary activation device 23, the ROV operator may activate or deactivate the central processing unit 61, or reset the output device 90. In other examples, triggering one or more magnets may control other actions such as changing the unit of the output device 90, for example from kg to pounds.

In another example, the activation device 63 comprises one or more light sensors 69, as illustrated in figure 2. A complementary activation device 23 may then comprise a light source (not shown), for example a laser, to trigger the light sensors 69.

A subsea lifting operation by a ROV, operated by a ROV operator, and using the subsea load monitoring system 10 may typically be performed in the following manner. The subsea load monitoring apparatus 1 is typically stored at the seabed when not in use, attached at one of the load attachment means 51, 52 to a subsea installation (not shown) and to a buoyancy element 70 at the other one of the load attachment means 51, 52, so the subsea load monitoring apparatus 1 may be easily picked up by a ROV 2. The ROV 2 picks up the subsea load monitoring apparatus 1 with the buoyancy element 70 still attached to it and moves it to the subsea load 3 to be lifted. The ROV 2 attaches the subsea load monitoring apparatus 1 to the subsea load 3 at the free load attachment means 51, 52. With one arm 22, the ROV 2 pulls down slightly on the attached buoyancy element 70 so that no buoyancy force is acting on the subsea load monitoring apparatus 1 from the buoyancy element 70. Using a complementary activation device 23, the ROV 2 triggers the activation device 63, which activates the central processing unit 61 from an idle operational mode to an active operational mode. The output device 90 is set to zero upon activation. The ROV 2 releases the buoyancy element 70 and the buoyancy applied by the buoyancy element 70 can now be read from the output device 90. The ROV operator may direct the ROV camera 27 towards the display 92 to read the output. Alternatively or additionally the output may be sent from the sonar transmitter 94 to the receiver 25 on the ROV 2, and further to the ROV operator through the ROV umbilical 21. The ROV operator may continue to add buoyancy elements 70 to the subsea load monitoring apparatus 1, directly or indirectly through a buoyancy element 70, and checking the output device 90 for added buoyancy, until the ROV operator is satisfied with the amount of buoyancy added to the subsea load 3. The ROV operator may now start the lifting procedure.

In figure 4 and 5, the buoyancy element 70 has the shape of a balloon. It is apparent that any other shape of a buoyancy element 70 may be used. Several buoyancy elements 70, of any shape and sizes, may be attached to the subsea load monitoring apparatus 1 to adjust the buoyancy added to the subsea load 3. Buoyancy elements with adjustable buoyancy may also be attached to the subsea load monitoring apparatus 1.

The ROV operator may use the complementary activation device 23 to reset the output device 90 to zero. This may be advantageous for example if there has been a change in the hydrostatic pressure surrounding the subsea load monitoring apparatus 1.

The subsea load monitoring apparatus 1 may comprise one or more sensors 65. In the example shown in figure 2, the subsea load monitoring apparatus comprises a pressure sensor 65. If the subsea load monitoring apparatus 1 is moved up or down under water, the surrounding, hydrostatic pressure may compress or stretch the strain gauge 40 which may be interpreted as removed or added buoyancy. Signals from the pressure sensor 65 may be processed by the central processing unit 61. The signals from the pressure sensor 65 may typically be amplified and digitised. The processed signals may then be used together with the signals from the strain gauge 40 in the buoyancy calculations to compensate for the effect of the hydrostatic pressure.

In the example shown in the figures, the central processing unit 61, the strain gauge 40, the batteries 60, the activation device 63, and the output device 90 are comprised within the housing 15.

In other examples (not shown) of the subsea load monitoring apparatus 1, some of the components of the subsea load monitoring apparatus 1 may be separate from the housing 15. One or more of the batteries 60, the central processing unit 61, the activation device 63, and the output device 90 may for example be comprised within a ROV 2 configured for transmitting and receiving data from the housing 15, such as measurements from the load sensor. The housing 15 may comprise the output device 90 which may comprise a sonar transmitter to transmit measurements from the load sensor to a sonar receiver 25 on the ROV 2.

In other examples (not shown) of the subsea load monitoring apparatus 1, the load sensor comprises a FBG sensor. The FBG sensor converts optical signals from a fibre comprising Bragg Gratings to strain measurements of the fibre.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. Subsea load monitoring apparatus (1) comprising:
- a load sensor (40) having a first end (41) and a second end (42);
- a central processing unit (61) configured for processing measurements from the load sensor (40);
- a battery (60) for powering the central processing unit (61);
- an activation device (63) being configured for activating the central processing unit (61) from an idle operational mode to an active operational mode;
- a first and a second load attachment means (51, 52) connected to the first and second end (41, 42) of the load sensor (40), respectively;
- an output device (90) for the processed measurements from the load sensor (40); and **characterised in**
- a housing (15) that comprises at least the load sensor (40), the central processing unit (61), the battery (60), the activation device (63) and the output device (90).

2. The subsea load monitoring apparatus (1) according to claim 1, wherein the activation device (63) is configured for resetting the output device (90).

3. The subsea load monitoring apparatus (1) according to claim 1 or 2, wherein the activation device (63) is configured for deactivating the central processing unit (61) from an active operational mode to an idle operational mode.

4. The subsea load monitoring apparatus (1) according to any one of the preceding claims, wherein the activation device (63) comprises a magnet (67).

5. The subsea load monitoring apparatus (1) according to any one of the preceding claims, wherein the activation device (63) comprises a light sensor (69).

6. The subsea load monitoring apparatus (1) according to any one of the preceding claims, wherein the activation device (63) is configured for activating the central processing unit (61) from an idle operational mode to an active operational mode when the load sensor (40) measures a strain that is outside a set range of values.

7. The subsea load monitoring apparatus (1) according to any one of the preceding claims, wherein the subsea load monitoring apparatus (1) further comprises one or more sensors.

8. The subsea load monitoring apparatus (1) according to claim 7, wherein the one or more sensors comprises a pressure sensor (65).

9. The subsea load monitoring apparatus (1) according to claim 7, wherein the one or more sensors is configured for detecting a leakage of oil or gas.

10. The subsea load monitoring apparatus (1) according to any one of the preceding claims, wherein the output device (90) comprises a display (92) for displaying the processed measurements from the load sensor (40).

11. The subsea load monitoring apparatus (1) according to any one of the preceding claims, wherein the output device (90) comprises a sonar transmitter (94) configured for transmitting the processed measurements.

12. A subsea load monitoring system (10) comprising:
- a subsea load monitoring apparatus (1) according to any one of the preceding claims;
- a ROV (2); and
- a complementary activation device (23) for triggering the activation device (63) in the subsea load monitoring apparatus (1).

13. The subsea load monitoring system (10) according to claim 12, wherein the ROV (2) further comprises a sonar receiver (25) configured for receiving the processed measurements from the subsea load monitoring apparatus (1).

14. A method for lifting a subsea load (3), the method comprising the steps of:
- providing the subsea load monitoring system according to claim 12 or 13;
- attaching the first load attachment means (51) of the subsea load monitoring apparatus (1) to the subsea load (3);
- activating the subsea load monitoring apparatus (1);
- attaching a buoyancy element (70) to the second load attachment means (52) of the subsea load monitoring apparatus (1); and
- lifting the subsea load (3).

15. The method according to claim 14, further comprising the step of moving the subsea load (3) to a desired location.

16. A method for estimating the weight of a subsea load (3), wherein the method comprises the steps of:
- anchoring the subsea load (3);
- providing the subsea load monitoring system according to claim 12 or 13;
- attaching the first load attachment means (51) of the subsea load monitoring apparatus (1) to the subsea load (3);
- activating the subsea load monitoring apparatus (1);
- stepwise attaching buoyancy elements (70) to the second load attachment means (52) of the subsea load monitoring apparatus (1) until the buoyancy elements (70) and the subsea load (3) have a total neutral buoyancy; and
- reading the processed measurements from the load sensor (40).

17. A mooring monitoring system (10) for an offshore structure, such as a fish pen or a floating wind turbine, the mooring monitoring system comprising a subsea load monitoring apparatus (1) according to any one of claims 1 to 11wherein the subsea load monitoring (1) apparatus is connected between the offshore structure and an anchoring point of the offshore structure.

## Patentansprüche

1. Einrichtung (1) zur Überwachung einer Unterwasserlast, umfassend:
- einen Lastsensor (40), der ein erstes Ende (41) und ein zweites Ende (42) aufweist;
- eine zentrale Verarbeitungseinheit (61), die konfiguriert ist zum Verarbeiten von Messungen des Lastsensors (40);
- eine Batterie (60) für die Stromversorgung der zentralen Verarbeitungseinheit (61);
- eine Aktivierungsvorrichtung (63), die konfiguriert ist zum Aktivieren der zentralen Verarbeitungseinheit (61) aus einem Leerlauf-Betriebsmodus in einen aktiven Betriebsmodus;
- erste und zweite Lastbefestigungsmittel (51, 52), die jeweils mit dem ersten und dem zweiten Ende (41, 42) des Lastsensors (40) verbunden sind;
- eine Ausgabevorrichtung (90) für die verarbeiteten Messungen des Lastsensors (40); und **gekennzeichnet durch**
- ein Gehäuse (15), das mindestens den Lastsensor (40), die zentrale Verarbeitungseinheit (61), die Batterie (60), die Aktivierungsvorrichtung (63) und die Ausgabevorrichtung (90) umfasst.

2. Einrichtung (1) zur Überwachung einer Unterwasserlast nach Anspruch 1, wobei die Aktivierungsvorrichtung (63) konfiguriert ist zum Zurücksetzen der Ausgabevorrichtung (90).

3. Einrichtung (1) zur Überwachung einer Unterwasserlast nach Anspruch 1 oder 2, wobei die Aktivierungsvorrichtung (63) zum Deaktivieren der zentralen Verarbeitungseinheit (61) aus einem aktiven Betriebsmodus in einen Leerlauf-Betriebsmodus konfiguriert ist.

4. Einrichtung (1) zur Überwachung einer Unterwasserlast nach einem der vorstehenden Ansprüche, wobei die Aktivierungsvorrichtung (63) einen Magneten (67) umfasst.

5. Einrichtung (1) zur Überwachung einer Unterwasserlast nach einem der vorstehenden Ansprüche, wobei die Aktivierungsvorrichtung (63) einen Lichtsensor (69) umfasst.

6. Einrichtung (1) zur Überwachung einer Unterwasserlast nach einem der vorstehenden Ansprüche, wobei die Aktivierungsvorrichtung (63) konfiguriert ist zum Aktivieren der zentralen Verarbeitungseinheit (61) aus einem Leerlauf-Betriebsmodus in einen aktiven Betriebsmodus, wenn der Lastsensor (40) eine Dehnung misst, die außerhalb eines eingestellten Wertebereichs liegt.

7. Einrichtung (1) zur Überwachung einer Unterwasserlast nach einem der vorstehenden Ansprüche, wobei die Einrichtung (1) zur Überwachung einer Unterwasserlast weiter einen oder mehrere Sensoren umfasst.

8. Einrichtung (1) zur Überwachung einer Unterwasserlast nach Anspruch 7, wobei der eine oder die mehreren Sensoren einen Drucksensor (65) umfassen.

9. Einrichtung (1) zur Überwachung einer Unterwasserlast nach Anspruch 7, wobei der eine oder die mehreren Sensoren zum Erkennen einer Öl- oder Gasleckage konfiguriert sind.

10. Einrichtung (1) zur Überwachung einer Unterwasserlast nach einem der vorstehenden Ansprüche, wobei die Ausgabevorrichtung (90) eine Anzeige (92) zum Anzeigen der verarbeiteten Messungen des Lastsensors (40) umfasst.

11. Einrichtung (1) zur Überwachung einer Unterwasserlast nach einem der vorstehenden Ansprüche, wobei die Ausgabevorrichtung (90) einen Sonarsender (94) umfasst, der konfiguriert ist zum Übertragen der verarbeiteten Messungen.

12. System zur Überwachung einer Unterwasserlast (10), umfassend:
- eine Einrichtung (1) zur Überwachung einer Unterwasserlast nach einem der vorstehenden Ansprüche;
- ein ferngesteuertes Unterwasserfahrzeug (2); und
- eine komplementäre Aktivierungsvorrichtung (23) zum Auslösen der Aktivierungsvorrichtung (63) in der Einrichtung zur Überwachung einer Unterwasserlast (1).

13. System zur Überwachung einer Unterwasserlast (10) nach Anspruch 12, wobei das ferngesteuerte Unterwasserfahrzeug (2) weiter einen Sonarempfänger (25) umfasst, der konfiguriert ist zum Empfangen der verarbeiteten Messungen von der Einrichtung zur Überwachung einer Unterwasserlast (1).

14. Verfahren zum Heben einer Unterwasserlast (3), wobei das Verfahren die folgenden Schritte umfasst:
- Bereitstellen des Systems zur Überwachung einer Unterwasserlast nach Anspruch 12 oder 13;
- Befestigen des ersten Lastbefestigungsmittels (51) der Einrichtung (1) zur Überwachung einer Unterwasserlast an der Unterwasserlast (3);
- Aktivieren der Einrichtung zur Überwachung einer Unterwasserlast (1);
- Befestigen eines Auftriebskörpers (70) am zweiten Lastbefestigungsmittel (52) der Einrichtung zur Überwachung einer Unterwasserlast (1); und
- Heben der Unterwasserlast (3).

15. Verfahren nach Anspruch 14, weiter umfassend den Schritt des Bewegens der Unterwasserlast (3) an einen gewünschten Standort.

16. Verfahren zum Schätzen des Gewichts einer Unterwasserlast (3), wobei das Verfahren die folgenden Schritte umfasst:
- Verankern der Unterwasserlast (3);
- Bereitstellen des Systems zur Überwachung einer Unterwasserlast nach Anspruch 12 oder 13;
- Befestigen des ersten Lastbefestigungsmittels (51) der Einrichtung (1) zur Überwachung einer Unterwasserlast an der Unterwasserlast (3);
- Aktivieren der Einrichtung zur Überwachung einer Unterwasserlast (1);
- schrittweises Befestigen von Auftriebskörpern (70) an den zweiten Lastbefestigungsmitteln (52) der Einrichtung (1) zur Überwachung einer Unterwasserlast, bis die Auftriebskörper (70) und die Unterwasserlast (3) zusammen einen neutralen Gesamtauftrieb aufweisen; und
- Lesen der verarbeiteten Messungen des Lastsensors (40).

17. Vertäuungsüberwachungssystem (10) für eine Offshore-Struktur, wie ein Fischgehege oder eine schwimmende Windturbine, wobei das Vertäuungsüberwachungssystem eine Einrichtung (1) zur Überwachung einer Unterwasserlast nach einem der Ansprüche 1 bis 11 umfasst, wobei die Einrichtung (1) zur Überwachung einer Unterwasserlast zwischen der Offshore-Struktur und einem Verankerungspunkt der Offshore-Struktur verbunden ist.

## Revendications

1. Appareil (1) de surveillance de charge sous-marine comprenant :
- un capteur de charge (40) présentant une première extrémité (41) et une deuxième extrémité (42) ;
- une unité centrale de traitement (61) configurée pour traiter des mesures provenant du capteur de charge (40) ;
- une batterie (60) pour l'alimentation de l'unité centrale de traitement (61) ;
- un dispositif d'activation (63) configuré pour activer l'unité centrale de traitement (61) d'un mode opérationnel inactif à un mode opérationnel actif ;
- des premier et deuxième moyens (51, 52) de fixation de charge reliés respectivement aux première et deuxième extrémités (41, 42) du capteur de charge (40) ;
- un dispositif de sortie (90) pour les mesures traitées provenant du capteur de charge (40) ; et **caractérisé par**
- un boîtier (15) qui comprend au moins le capteur de charge (40), l'unité centrale de traitement (61), la batterie (60), le dispositif d'activation (63) et le dispositif de sortie (90).

2. Appareil (1) de surveillance de charge sous-marine selon la revendication 1, dans lequel le dispositif d'activation (63) est configuré pour réinitialiser le dispositif de sortie (90).

3. Appareil (1) de surveillance de charge sous-marine selon la revendication 1 ou la revendication 2, dans lequel le dispositif d'activation (63) est configuré pour désactiver l'unité centrale de traitement (61) d'un mode opérationnel actif à un mode opérationnel inactif.

4. Appareil (1) de surveillance de charge sous-marine selon l'une quelconque des revendications précédentes, dans lequel le dispositif d'activation (63) comprend un aimant (67).

5. Appareil (1) de surveillance de charge sous-marine selon l'une quelconque des revendications précédentes, dans lequel le dispositif d'activation (63) comprend un capteur de lumière (69).

6. Appareil (1) de surveillance de charge sous-marine selon l'une quelconque des revendications précédentes, dans lequel le dispositif d'activation (63) est configuré pour activer l'unité centrale de traitement (61) d'un mode opérationnel inactif à un mode opérationnel actif lorsque le capteur de charge (40) mesure une déformation qui est en dehors d'une plage de valeurs définie.

7. Appareil (1) de surveillance de charge sous-marine selon l'une quelconque des revendications précédentes, dans lequel l'appareil (1) de surveillance de charge sous-marine comprend en outre un ou plusieurs capteurs.

8. Appareil (1) de surveillance de charge sous-marine selon la revendication 7, dans lequel le ou les capteurs comprennent un capteur de pression (65).

9. Appareil (1) de surveillance de charge sous-marine selon la revendication 7, dans lequel le ou les capteurs sont configurés pour détecter une fuite d'huile ou de gaz.

10. Appareil (1) de surveillance de charge sous-marine selon l'une quelconque des revendications précédentes, dans lequel le dispositif de sortie (90) comprend une unité d'affichage (92) destinée à afficher les mesures traitées provenant du capteur de charge (40).

11. Appareil (1) de surveillance de charge sous-marine selon l'une quelconque des revendications précédentes, dans lequel le dispositif de sortie (90) comprend un émetteur de sonar (94) configuré pour émettre les mesures traitées.

12. Système (10) de surveillance de charge sous-marine comprenant :
- un appareil (1) de surveillance de charge sous-marine selon l'une quelconque des revendications précédentes ;
- un véhicule sous-marin téléopéré (ROV) (2) ; et
- un dispositif d'activation complémentaire (23) destiné à déclencher le dispositif d'activation (63) dans l'appareil (1) de surveillance de charge sous-marine.

13. Système (10) de surveillance de charge sous-marine selon la revendication 12, dans lequel le ROV (2) comprend en outre un récepteur de sonar (25) configuré pour recevoir les mesures traitées provenant de l'appareil (1) de surveillance de charge sous-marine.

14. Procédé de levage d'une charge sous-marine (3), le procédé comprenant les étapes suivantes :
- la fourniture du système de surveillance de charge sous-marine selon la revendication 12 ou la revendication 13 ;
- la fixation du premier moyen (51) de fixation de charge de l'appareil (1) de surveillance de charge sous-marine à la charge sous-marine (3) ;
- l'activation de l'appareil (1) de surveillance de charge sous-marine ;
- la fixation d'un élément de flottabilité (70) au deuxième moyen (52) de fixation de charge de l'appareil (1) de surveillance de charge sous-marine ; et
- le levage de la charge sous-marine (3).

15. Procédé selon la revendication 14, comprenant en outre l'étape de déplacement de la charge sous-marine (3) vers un emplacement souhaité.

16. Procédé d'estimation du poids d'une charge sous-marine (3), dans lequel le procédé comprend les étapes suivantes :
- l'ancrage de la charge sous-marine (3) ;
- la fourniture du système de surveillance de charge sous-marine selon la revendication 12 ou la revendication 13 ;
- la fixation du premier moyen (51) de fixation de charge de l'appareil (1) de surveillance de charge sous-marine à la charge sous-marine (3) ;
- l'activation de l'appareil (1) de surveillance de charge sous-marine ;
- la fixation progressive d'éléments de flottabilité (70) au deuxième moyen (52) de fixation de charge de l'appareil (1) de surveillance de charge sous-marine jusqu'à ce que les éléments de flottabilité (70) et la charge sous-marine (3) présentent une flottabilité neutre totale ; et
- la lecture des mesures traitées à partir du capteur de charge (40).

17. Système (10) de surveillance d'amarrage pour une structure offshore, telle qu'un compartiment à poisson ou une éolienne flottante, le système de surveillance d'amarrage comprenant un appareil (1) de surveillance de charge sous-marine selon l'une quelconque des revendications 1 à 11 dans lequel l'appareil de surveillance de charge sous-marine (1) est relié entre la structure offshore et un point d'ancrage de la structure offshore.
